(19) Europäisches Patentamt European Patent Office Office européen des brevets

(11) **EP 4 419 949 B1**

(12) **EUROPEAN PATENT SPECIFICATION**

(45) Date of publication and mention
of the grant of the patent:
**21.01.2026 Bulletin 2026/04**

(21) Application number: **22942968.3**

(22) Date of filing: **30.12.2022**

(51) International Patent Classification (IPC):
**G01T 1/29** *(2006.01)*    **G01T 1/20** *(2006.01)*
**G01T 1/24** *(2006.01)*

(52) Cooperative Patent Classification (CPC):
**G01T 1/244; G01T 1/247; G01T 1/2928**

(86) International application number:
**PCT/CN2022/144309**

(87) International publication number:
**WO 2024/138730 (04.07.2024 Gazette 2024/27)**

(54) **PHOTON-COUNTING DETECTORS FOR DETECTING RADIATION RAYS**

PHOTONENZÄHLENDE DETEKTOREN ZUR DETEKTION VON STRAHLUNGSSTRAHLEN

DÉTECTEURS DE COMPTAGE DE PHOTONS POUR LA DÉTECTION DE RAYONS DE RAYONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.08.2024 Bulletin 2024/35**

(73) Proprietor: **Shanghai United Imaging Healthcare Co., Ltd.**
**Shanghai 201807 (CN)**

(72) Inventor: **NIE, Zhen**
**Shanghai 201807 (CN)**

(74) Representative: **Wang, Bo**
**Panovision IP**
**Ebersberger Straße 3**
**85570 Markt Schwaben (DE)**

(56) References cited:
CN-A- 1 735 818    CN-A- 103 280 497
CN-A- 107 076 858    CN-A- 108 020 858
CN-A- 110 286 401    CN-A- 112 740 408
JP-A- 2015 125 063    US-A- 5 786 597
US-A1- 2007 075 251    US-A1- 2010 327 173
US-A1- 2018 292 544    US-B2- 9 753 157

• PENNICARD D ET AL: "A germanium hybrid pixel detector with 55m pixel size and 65,000 channels", JOURNAL OF INSTRUMENTATION, INSTITUTE OF PHYSICS PUBLISHING, BRISTOL, GB, vol. 9, no. 12, 4 December 2014 (2014-12-04), XP020275357, ISSN: 1748-0221, [retrieved on 20141204], DOI: 10.1088/1748-0221/9/12/P12003

**Description**

TECHNICAL FIELD

The present disclosure generally relates to radiation detection devices, and more particularly, relates to photon-counting detectors for detecting radiation rays.

BACKGROUND

A detector may be used for imaging in multiple fields such as medical imaging, industrial imaging, etc. Photonic detector technical currently has a large development prospect. For example, a photon-counting detector (PCD) may be used for a medical imaging device (e.g., an X-ray imaging device such as a computed tomography (CT) scanner) and the medical imaging device based on the photon-counting detector may have advantages such as realizing material component analysis, reducing a radiation dose of a subject, improving the accuracy of CT quantitative analysis, achieving an ultra-high spatial resolution, etc.

US2018/292544 shows a Multi-Chip-Module wherein the sensor area of the semiconductor also functions as substrate.

PENNICARD D ET AL: "A germanium hybrid pixel detector with 55μm pixel size and 65,000 channels",JOURNAL OF INSTRUMENTATION, INSTITUTE OF PHYSICS PUBLISHING, BRISTOL, GB, vol. 9, no. 12, 4 December 2014 (2014-12-04), discloses a Ge-pixel sensor connected to plural ASICs on a ceramic circuit board. It discloses the choice of a co-fired ceramic material (LTCC) with a coefficient of thermal expansion of 6 ppm/K therefore similar to the 6 ppm/K for the Ge- sensor.

Therefore, it is desirable to provide an efficient photon-counting detector, improving the stability and reliability during the operation of the detector and reducing the manufacturing cost of the detector.

SUMMARY

In an aspect of the present disclosure, a photon-counting detector is provided according to claim 1.

As an example not encompassed by the appended claims, the sensor layer and the one or more processing circuits may be disposed on different surfaces of the substrate that are substantially perpendicular to a reference direction.

As an example not encompassed by the appended claims, a stray capacitance of the substrate may be less than a threshold.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1A is a schematic diagram illustrating an exemplary imaging system according to some embodiments of the present disclosure;

FIG. 1B is a schematic diagram illustrating an exemplary imaging device according to some embodiments of the present disclosure;

FIG. 2 is a schematic diagram illustrating an exemplary photon-counting detector not encompassed by the appended claims, but suitable for understanding the invention;

FIG. 3 is a schematic diagram illustrating an exemplary photon-counting detector not encompassed by the appended claims, but suitable for understanding the invention;

FIG. 4 is a structural diagram illustrating an exemplary photon-counting detector not encompassed by the appended claims, but suitable for understanding the invention;

FIG. 5 is a schematic diagram illustrating an exemplary photon-counting detector not encompassed by the appended claims, but suitable for understanding the invention;

FIG. 6 is a schematic diagram illustrating an exemplary photon-counting detector according to some embodiments of the present disclosure:

FIG. 7 is a schematic diagram illustrating an exemplary photon-counting detector according to some other embodiments of the present disclosure; and
FIG. 8 is a schematic diagram illustrating an exemplary ceramic substrate according to some embodiments of the present disclosure.

DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but to be accorded the widest scope defined by the appended claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that when a unit, engine, module, or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

For illustration purposes, the following description is provided to help better understand the present disclosure. It is understood that this is not intended to limit the scope of the present disclosure. For persons having ordinary skills in the art, a certain amount of variations, changes, and/or modifications may be deducted under the guidance of the present disclosure. Those variations, changes, and/or modifications do not depart from the scope of the present disclosure.

An aspect of the present disclosure relates to a photon-counting detector according to claim 1.

According to the embodiments of the present disclosure, the photon-counting detector uses a substrate whose coefficient of thermal expansion is close to that of the sensor layer for transmitting signals between the one or more processing circuits and the sensor layer and possibly other components connected with the photon-counting detector, while a traditional photon-counting detector may use a resin substrate whose coefficient of thermal expansion is quite different from that of the sensor layer (e.g., a difference between the coefficient of thermal expansion of the resin substrate and the coefficient of thermal expansion of the sensor layer greater than a threshold). In some embodiments, the photon-counting detector may need to be packaged under a relatively high temperature (e.g., 200 °C). The resin substrate may tend to deform under a relatively high temperature, which makes the package of the photon-counting detector complicated and costly. In addition, the difference in the coefficients of thermal expansion between the resin substrate and the sensor layer may result in a connection failure between the sensor layer and the resin substrate, which reduces the reliability of the photon-counting detector. In contrast to the resin substrate, the substrate used in the present disclosure may have a deformation with a relatively low degree (or have no deformation) under a relatively high temperature. As encompassed by the appended claims, the substrate includes a ceramic substrate (e.g., a single ceramic substrate) whose coefficient of thermal expansion is close to (e.g., consistent with) that of the sensor layer, which reduces the difficulty of the package, reduces the cost of the package, and/or improves the reliability of the photon-counting detector.

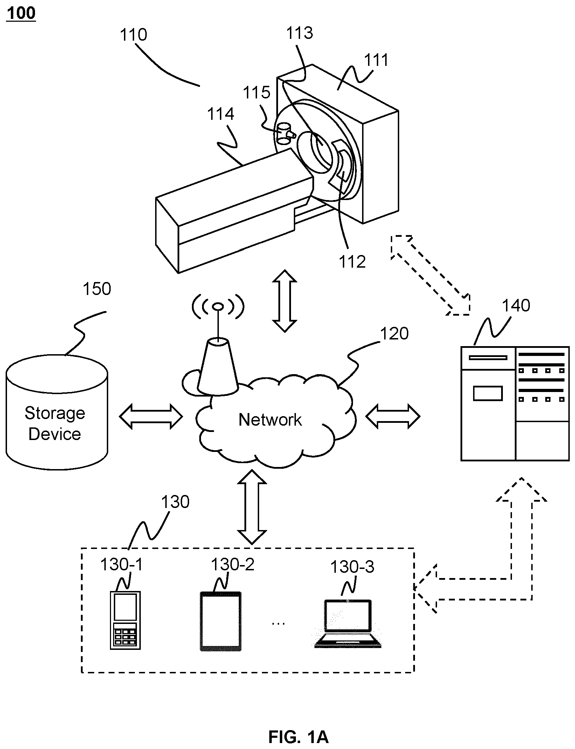

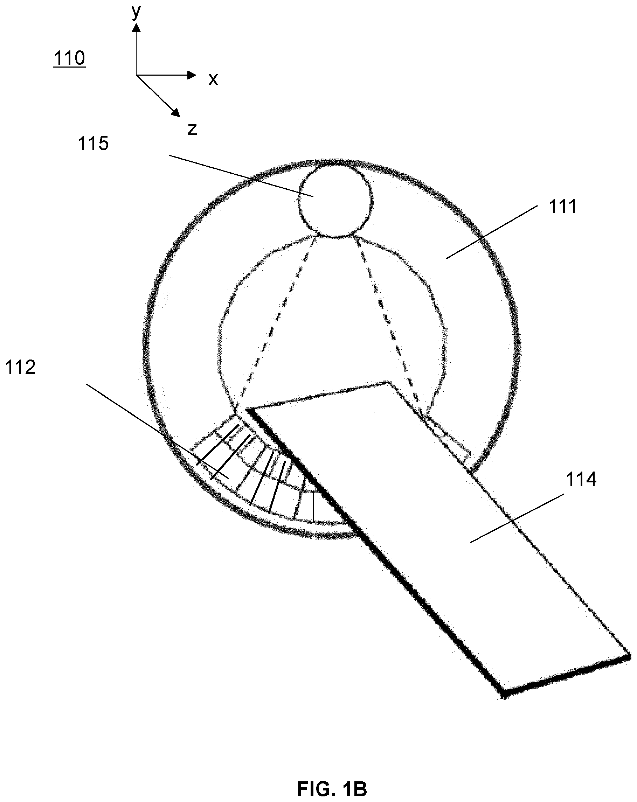

FIG. 1 is a schematic diagram illustrating an exemplary imaging system according to some embodiments of the present disclosure. As shown, the imaging system 100 may include an imaging device 110, a network 120, one or more terminals 130, a processing device 140, and a storage device 150. In some embodiments, the imaging device 110, the processing device 140, the storage device 150, and/or the terminal(s) 130 may be connected to and/or communicate with each other via a wireless connection (e.g., the network 120), a wired connection, or a combination thereof. The connection between the components in the imaging system 100 may be variable. Merely by way of example, the imaging device 110 may be connected to the processing device 140 through the network 120, as illustrated in FIG. 1. As another example, the imaging device 110 may be connected to the processing device 140 directly. As a further example, the storage device 150 may be connected to the processing device 140 through the network 120, as illustrated in FIG. 1, or connected to the processing device 140 directly.

The imaging device 110 may be configured to acquire image data relating to at least one part of a subject. The imaging device 110 may scan the subject or a portion thereof that is located within its detection region and generate image data (e.g., an initial image) relating to the subject or the portion thereof. The image data relating to at least one part of a subject may include an image (e.g., an image slice), projection data, or a combination thereof. In some embodiments, the imaging device 110 may include a single modality imaging device. For example, the imaging device 110 may include a CT device, an X-ray imaging device (e.g., a DR scanner, a computed radiography (CR) scanner), or the like, or any combination thereof. In some embodiments, the imaging device 110 may include a multi-modality imaging device. Exemplary multi-modality imaging devices may include a PET-CT device, a CT-guided radiotherapy device, etc. The following descriptions are provided unless otherwise stated expressly, with reference to a CT device for illustration purposes, which is not intended to be limiting.

As illustrated, the imaging device 110 may include a supporting assembly 111, a detector assembly 112, a detecting region 113, a table 114, and a radiation emitting assembly 115. The supporting assembly 111 may support the detector assembly 112 and the radiation emitting assembly 115. The supporting assembly 111 may rotate, for example, clockwise or counterclockwise about an axis of rotation of the supporting assembly 111. The radiation emitting assembly 115 may rotate together with the supporting assembly 111. The subject may be placed on the table 114 and moved to the detecting region 113 along with a movement of the table 114. The radiation emitting assembly 115 may emit a beam of radiation rays (e.g., X-rays) to the subject. The detector assembly 112 may detect the radiation beam passing through the detecting region 113 without converting the radiation beam into visible lights. For example, the detector assembly 112 may convert radiation photons of the radiation beam directly into an electronic signal. The electronic signal may be transmitted to a computing device (e.g., the processing device 120) for processing, or transmitted to a storage device (e.g., the storage device 150) for storage. More descriptions for components of the imaging device 110 may be found elsewhere in the present in the present disclosure (e.g., FIGs. 1B and 2-6 and the descriptions thereof).

The network 120 may include any suitable network that can facilitate the exchange of information and/or data for the imaging system 100. In some embodiments, one or more components (e.g., the imaging device 110, the terminal 130, the processing device 140, the storage device 150, etc.) of the imaging system 100 may communicate information and/or data with one or more other components of the imaging system 100 via the network 120. For example, the processing device 140 may obtain image data from the imaging device 110 via the network 120. As another example, the processing device 140 may obtain user instructions from the terminal 130 via the network 120. In some embodiments, the network 120 may include one or more network access points. For example, the network 120 may include wired and/or wireless network access points such as base stations and/or internet exchange points through which one or more components of the imaging system 100 may be connected to the network 120 to exchange data and/or information.

The terminal(s) 130 may include a mobile device 130-1, a tablet computer 130-2, a laptop computer 130-3, or the like, or any combination thereof. In some embodiments, the mobile device 130-1 may include a smart home device, a wearable device, a mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a bracelet, a footgear, eyeglasses, a helmet, a watch, clothing, a backpack, a smart accessory, or the like, or any combination thereof. In some embodiments, the mobile device may include a mobile phone, a personal digital assistance (PDA), a gaming device, a navigation device, a point of sale (POS) device, a laptop, a tablet computer, a desktop, or the like, or any combination thereof. In some embodiments, the virtual reality device and/or the augmented reality device may include a virtual reality helmet, virtual reality glasses, a virtual reality patch, an augmented reality helmet, augmented reality glasses, an augmented reality patch, or the like, or any combination thereof. In some embodiments, the terminal(s) 130 may be part of the processing device 140.

The processing device 140 may process data and/or information obtained from one or more components (the imaging device 110, the terminal(s) 130, and/or the storage device 150) of the imaging system 100. For example, the processing device 140 may process image data acquired by the imaging device 110 (e.g., image data detected by the photon-counting detector assembly 112 of the imaging device 110) and reconstruct an image based on the image data. In some embodiments, the processing device 140 may be a single server or a server group. The server group may be centralized or distributed. In some embodiments, the processing device 140 may be local or remote. For example, the processing device 140 may access information and/or data stored in the imaging device 110, the terminal(s) 130, and/or the storage device 150 via the network 120. As another example, the processing device 140 may be directly connected to the imaging device 110, the terminal(s) 130, and/or the storage device 150 to access stored information and/or data. In some embodiments, the processing device 140 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the processing device 140 may be implemented by a computing device. For example, the computing device may include a processor, a storage, an input/output (I/O), and a communication port. The processor may execute computer instructions (e.g., program codes) and perform functions of the processing device 140 in accordance with the techniques described herein. The computer instructions may include, for example, routines, programs, objects, components, data structures, procedures, modules, and functions, which perform particular functions described herein. In some embodiments, the processing device 140, or a portion of the processing device 140 may be implemented by a portion of the terminal 130.

The storage device 150 may store data/information obtained from the imaging device 110, the terminal(s) 130, and/or any other component of the imaging system 100. In some embodiments, the storage device 150 may include a mass storage, a removable storage, a volatile read-and-write memory, a read-only memory (ROM), or the like, or any combination thereof. For example, the mass storage may include a magnetic disk, an optical disk, a solid-state drive, etc. The removable storage may include a flash drive, a floppy disk, an optical disk, a memory card, a zip disk, a magnetic tape, etc. In some embodiments, the storage device 150 may store one or more programs and/or instructions to perform exemplary methods described in the present disclosure.

In some embodiments, the storage device 150 may be connected to the network 120 to communicate with one or more other components in the imaging system 100 (e.g., the processing device 140, the terminal(s) 130, etc.). One or more components in the imaging system 100 may access the data or instructions stored in the storage device 150 via the network 120. In some embodiments, the storage device 150 may be directly connected to or communicate with one or more other components in the imaging system 100 (e.g., the processing device 140, the terminal(s) 130, etc.). In some embodiments, the storage device 150 may be part of the processing device 140.

FIG. 1B is a schematic diagram illustrating a view of an exemplary imaging device 110 according to some embodiments of the present disclosure. As shown in FIG. 1B, the detector assembly 112 and the radiation emitting assembly 115 may be both disposed on the supporting assembly 111. In some embodiments, the supporting assembly 111 may include a gantry. The gantry may include a housing and a bore. In some embodiments, the gantry may further include a main frame, one or more support components, or the like, or a combination thereof. The housing may form a cavity around the bore to accommodate one or more components of the imaging device 110 (e.g., the radiation emitting assembly 115, the detector assembly 112, the one or more support components, etc.). In some embodiments, the housing may include an annular structure. A detection region may be located within the annular structure. The detector assembly 112 and the radiation emitting assembly 115 may be located at both ends of the annular structure along a diameter direction, respectively. The detection region may accommodate the subject to be scanned. The subject to be scanned may be supported by the table 114. For example, the housing may include a front cover and a rear cover as described in FIG. 1B. The front cover and the rear cover may form the annular structure. The rear cover may enclose the bore. The front cover and the rear cover may define the cavity. The bore may be configured to accommodate an object for the scan. In other words, the bore may include a detection region (e.g., the detecting region 113) of the imaging device 110. In some embodiments, the radiation emitting assembly 115 and the detector assembly 112 may be located in the cavity along an opposite direction. In some embodiments, a line connecting a radiation source of the radiation emitting assembly 115 and the center of the detector assembly 112 may pass through the center of the detection region.

In some embodiments, the detector assembly 112 may include a detector. In some embodiments, the radiation emitting assembly 115 may include a radiation source. The radiation source may be configured to generate and/or emit radiation rays (e.g., X-rays) to scan the scanned object that is placed on the table 114. The detector may detect the radiation rays (e.g., X-rays) penetrated through at least part of the scanned object within the detecting region. The detector may generate an electronic signal based on the detected radiation rays.

In some embodiments, the detector may include one or more photon-counting detectors. In some embodiments, the shape of the detector may not be limited. As used herein, the shape of the detector may refer to a surface of the detector facing the radiation source or a surface of the detector back to the radiation source. In some embodiments, the shape of the detector may be a plate shape. In some embodiments, the shape of the detector may be an arc shape. For example, the detector may be distributed along the circumferential direction of the bore.

In the embodiments encompassed by the appended claims, a photon-counting detector includes one or more components, namely, a sensor layer, and possibly one or more readout electronic layers, etc. The detector may operate in a photon-counting mode Taking the photon-counting detector including one substrate (e.g., a substrate whose coefficient of thermal expansion is close to that of the sensor layer) as an example, during a scan for imaging, the sensor layer may be subjected to a large voltage. The sensor layer may absorb incident radiation photons (e.g., incident X-ray photons) and the incident radiation photons may generate clouds of positive charges and negative charges. The positive charges and negative charges may move under the large voltage. The moving charges may generate an electrical pulse (i.e., an electrical signal). The electrical pulse may be transmitted to the one or more readout electric layers via the substrate (e.g., wires of the substrate). The one or more readout electric layers may receive the electrical pulse, process the electrical pulse for detecting the incident radiation photons, and/or generate, based on the electrical pulse, electronic signals that include information (e.g., energies) of the incident radiation photons. Thus, the photon-counting detector may achieve converting the incident radiation photons directly into an electronic signal.

A readout electric layer may include a substrate (e.g., a substrate whose coefficient of thermal expansion is close to that of the sensor layer) and a processing circuit. Further, the substrate may be electrically connected with the processing device 140. The substrate may transmit the electrical pulse to the processing circuit, receive the electronic signals including the information of the incident radiation photons from the one or more processing circuits, and/or transmit the signal to the processing device 140 for subsequent processing (e.g., for image reconstruction).

In some embodiments, the detector may include a plurality of detector rows distributed along the Z axis of the imaging device 110 as shown in FIG. 1B. Each of the plurality of detector rows may include a plurality of detector modules distributed along a direction substantially parallel to the X axis of the imaging device 110 as shown in FIG. 1B or a circumference direction of the bore of the imaging device 110.

In some embodiments, each of the plurality of detector modules may include one or more photon-counting detectors. For example, each of the one or more photon-counting detectors in a detector module may include a sensor layer, a substrate whose coefficient of thermal expansion is close to that of the sensor layer, and a processing circuit.

In some embodiments, each of the plurality of detector modules may include one or more sensor layers, one or more substrates whose coefficient of thermal expansion is close to that of the sensor layers, and one or more processing circuits.

In some embodiments, at least two adjacent sensor layers of a detector module may be separated from each other. In some embodiments, the sensor layers of a detector module may be connected with each other. In some embodiments, the sensor layers of a detector module may be an integrated structure. In other words, the detector module may include one single sensor layer. In some embodiments, at least two adjacent substrates of a detector module may be separated from each other. In some embodiments, the substrates of a detector module may be connected with each other. In some embodiments, the substrates of a detector module may be an integrated structure. In other words, the detector module may include one single substrate. In some embodiments, at least two adjacent processing circuits of a detector module may be separated from each other. In some embodiments, the processing circuits of a detector module may be connected with each other. In some embodiments, the processing circuits of a detector module may be an integrated structure. In other words, the detector module may include one single processing circuit.

In some embodiments, at least two adjacent sensor layers of the plurality of detector modules in a detector row may be separated from each other. In some embodiments, the sensor layers of the plurality of detector modules in a detector row may be connected with each other. In some embodiments, the sensor layers of the plurality of detector modules in a detector row may be an integrated structure. In other words, the detector row may include one single sensor layer. In some embodiments, at least two adjacent substrates of the plurality of detector modules in a detector row may be separated from each other. In some embodiments, the substrates of the plurality of detector modules in a detector row may be connected with each other. In some embodiments, the substrates of the plurality of detector modules in a detector row may be an integrated structure. In other words, the detector row may include one single substrate. In some embodiments, at least two adjacent processing circuits of the plurality of detector modules in a detector row may be separated from each other. In some embodiments, the processing circuits of the plurality of detector modules in a detector row may be connected with each other. In some embodiments, the processing circuits of the plurality of detector modules in a detector row may be an integrated structure. In other words, the detector row may include one single processing circuit.

In some embodiments, at least two adjacent sensor layers in the detector may be separated from each other. In some embodiments, the sensor layers in the detector may be connected with each other. In some embodiments, the sensor layers in the detector may be an integrated structure. In other words, the detector may include one single sensor layer. In some embodiments, the substrates in the detector may be separated from each other. In some embodiments, the substrates in the detector may be connected with each other. In some embodiments, the substrates in the detector may be an integrated structure. In other words, the detector may include one single substrate. In some embodiments, the processing circuits in the detector may be separated from each other. In some embodiments, the processing circuits in the detector may be connected with each other. In some embodiments, the processing circuits in the detector may be an integrated structure. In other words, the detector may include one single processing circuit.

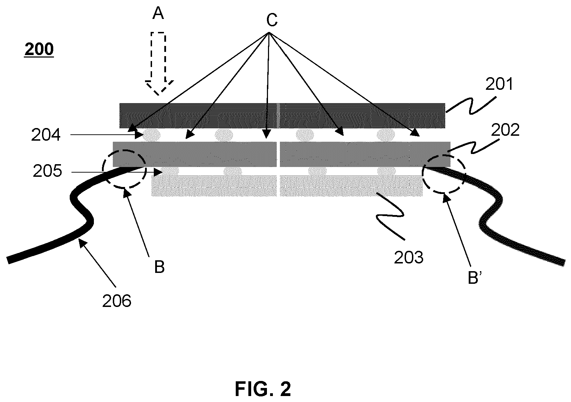

In some embodiments, taking the photon-counting detector including a sensor layer, a substrate whose coefficient of thermal expansion is close to that of the sensor layer, and a processing circuit as an example, the substrate may be electrically connected with the sensor layer and the processing circuit The sensor layer and the processing circuit may be disposed (or arranged) on the same surface of the substrate that is substantially perpendicular to a reference direction. Alternatively, the sensor layer and the processing circuit may be disposed on different sides of the substrate that are substantially perpendicular to the reference direction. More descriptions regarding structures and positions of components of the photon-counting detector may be found elsewhere in the present disclosure (e.g., FIGs. 2-6 and the descriptions thereof).

FIG. 2 is a schematic diagram illustrating an exemplary photon-counting detector not encompassed by the appended claims, but suitable for understanding embodiments of the present disclosure. The photon-counting detector 200 may be an embodiment of a photon-counting detector as described in FIGs. 1A and 1B. The photon-counting detector 200 may be applied in or be a part of the imaging device 110 for imaging. For example, the imaging device 110 may include one or more photon-counting detectors 200. As illustrated in FIG. 2, the photon-counting detector 200 may include a sensor layer 201, a substrate 202, and a processing circuit 203. The substrate 202 may be arranged between the sensor layer 201 and the processing circuit 203.

The sensor layer 201 may include a semiconductor layer. The semiconductor layer may include one or more crystalline materials. Exemplary crystalline materials may include silicon (Si), gallium arsenide (GaAs), cadmium telluride (CdTe), cadmium zinc telluride (CdTeZn), or the like, or any combination thereof. For example, the sensor layer 201 may include mono-crystals, e.g., Si crystals. As another example, the sensor layer 201 may include poly-crystals, e.g., CdTe crystals and CdTeZn crystals.

In some embodiments, the sensor layer 201 may include a first coefficient of thermal expansion that is relatively small. The first coefficient of thermal expansion may be less than a first threshold (e.g., 5 ppm/K, 10 ppm/K). Merely by way of example, for the sensor layer 201 including CdTeZn crystals, the first coefficient of thermal expansion of the sensor layer 201 may be 5 ppm/K. As used herein, a coefficient of thermal expansion of an object (e.g., a solid substance such as the sensor layer 201) refers to a relative deformation amount (e.g., a relative amount of volume change, a relative amount of length change, or relative amount of area change) of the object for per temperature unit (e.g., 1 K) increase. Taking the relative amount of volume change as an example, the coefficient of the thermal expansion of the object may be determined according to Equation (1) as follows:

$$CTE = (V' - V)/(V * \triangle T), \qquad (1)$$

where CTE denotes the coefficient of the thermal expansion of the object, V denotes an initial volume of the object at an initial temperature, $\triangle T$ denotes a temperature unit, and V' denotes a volume of the object after increasing the temperature unit from the initial temperature.

Taking the relative amount of area change as an example, the coefficient of the thermal expansion of the object may be determined according to Equation (2) as follows:

$$CTE = (S' - S)/(S * \triangle T), \qquad (2)$$

where CTE denotes the coefficient of the thermal expansion of the object, S denotes an initial area of the object at an initial temperature, $\triangle T$ denotes the temperature unit, and S' denotes an area of the object after increasing the temperature unit from the initial temperature. In some embodiments, the object may include one or more surfaces. An area of the object may refer to an area of one of the one or more surfaces of the object (e.g., a surface that has a maximum area change among the one or more surfaces), an average area of the one or more surfaces of the object, a total area of the one or more surfaces of the object, or the like, or any combination thereof.

Taking the relative amount of length change as an example, the coefficient of the thermal expansion of the object may be determined according to Equation (3) as follows:

$$CTE = (L' - L)/(L * \triangle T), \qquad (3)$$

where CTE denotes the coefficient of the thermal expansion of the object, L denotes an initial length of the object (or an initial length of a portion of the object) along a direction at an initial temperature, $\triangle T$ denotes the temperature unit, and L' denotes a length of the object (or a length of the portion of the object) along the reference direction after increasing the temperature unit from the initial temperature. In some embodiments, multiple CTEs of the object along multiple directions respectively may be determined. The CTE of the object may be determined based on the multiple CTEs of the object along the multiple directions. For example, a CTE among the multiple CTEs along the multiple directions (e.g., a greatest CTE of the object among the multiple CTEs) may be denoted as the CTE of the object. As another example, an average of the multiple CTEs of the object along the multiple directions may be designated as the CTE of the object. As yet another example, a summarization of the multiple CTEs of the object along the multiple directions may be designated as the CTE of the object.

In some embodiments, the coefficient of the thermal expansion of the object may be detected by a CTE detection device. For example, the sensor layer 201 (e.g., materials that the sensor layer 201 includes) may be input to a detection region of the CTE detection device. The CTE detection device may output the CTE of the sensor layer automatically.

The sensor layer 201 may be configured to absorb (or receive) incident radiation photons (e.g., incident X-ray photons) for generating an electrical signal (e.g., an electrical pulse). The indecent radiation photons may be generated by a radiation source (e.g., the radiation source of the radiation emitting assembly 115 as shown in FIGs. 1A and 1B) and transmitted toward the sensor layer 201 after passing through a subject to be imaged. The sensor layer 201 may be attached to electrodes (not shown), e.g., the sensor layer 201 is arranged (or disposed) between a positive electrode (also referred to as an anode) and a negative electrode (also referred to as a cathode). The sensor layer 201 may be subjected to a large voltage by applying the large voltage to the electrodes. The incident radiation photons may irradiate along an incident direction on a surface of the sensor layer 201 attached to the negative electrode. For example, the incident direction may be parallel to a reference direction that is substantially perpendicular to the surfaces of the sensor layer 201 that are attached to the electrodes. As another example, the incident direction may form an angle with the surface of the sensor layer that is attached to the negative electrode. The incident radiation photons may be converted into electron-hole pairs in the sensor layer 201 under the large voltage. The electrons of the electron-hole pairs may move toward a surface of the sensor layer 201 attached to the positive electrode, in response to which the positive electrode generates the electrical signal. For illustration purposes, a direction that is substantially perpendicular to the surfaces of the sensor layer 201 that are attached to the electrodes may be designated as the reference direction (e.g., a direction denoted by dotted arrow A) for describing relative positions between the components of the photon-counting detector 200. In other words, the reference direction may refer to a direction that is substantially perpendicular to a surface of the sensor layer 201 that receives the incident radiation photons.

In some embodiments, an array of weld metal dots (or balls) 204 (e.g., silver (Ag) dots, tin (Sn) balls, etc.) may be connected with (e.g., printed on) the surface of the sensor layer 201 that is attached to the positive electrode. According to the array of the weld metal dots 204, the sensor layer 201 may be pixelated. Each of the weld metal dots 204 may correspond to a pixel. That is, the sensor layer 201 may be for a pixel array according to the array of the weld metal dots 204. In response to the incident radiation photons, each of the weld metal dots 204 may transmit an electrical signal corresponding to a pixel to the substrate 202 for further transmitting.

The substrate 202 may include a printed circuit board (PCB). The PCB may include one or more insulating materials. Exemplary insulating materials may include ceramic material, glass material (e.g., epoxy glass cloths), plastic material, paper material (e.g., phenolic papers), or the like, or any combination thereof. The substrate 202 may include a second coefficient of thermal expansion. The second coefficient of thermal expansion may be less than a second threshold (e.g., 5 ppm/K, 10 ppm/K). In some embodiments, the second coefficient of thermal expansion may be close to the first coefficient of thermal expansion of the sensor layer 201. For example, a difference between the first coefficient of the thermal expansion and the second coefficient of the thermal expansion may be less than a third threshold (e.g., 1.5 ppm/K, 1 ppm/K, 0.5 ppm/K, 0.1 ppm/K).

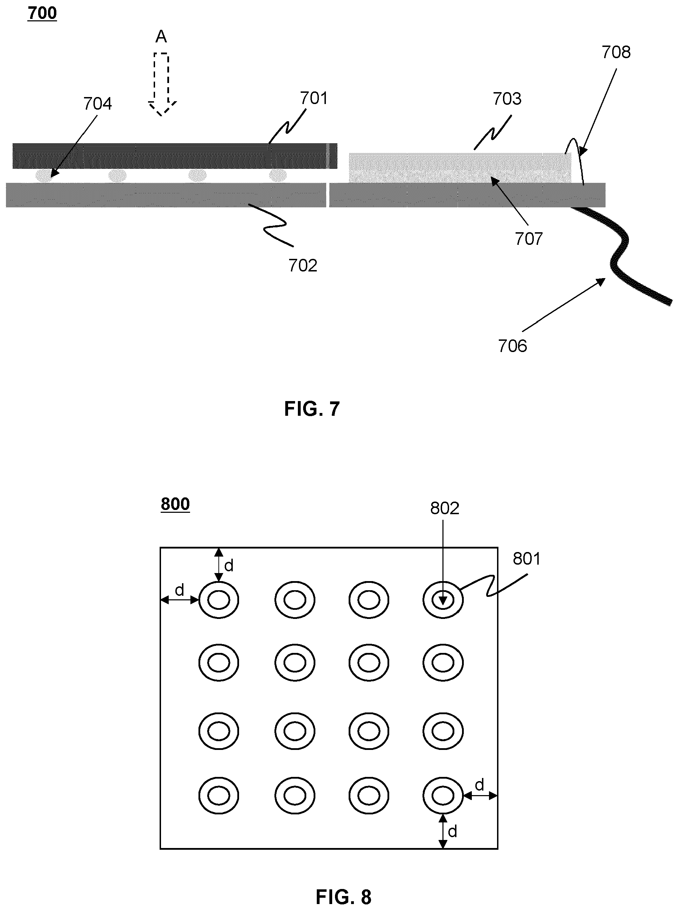

The substrate 202 may include a plurality of bonding pads and wires welded to the plurality of bonding pads. For illustration purposes, the following are described with reference to a substrate 202 made of ceramic material (also referred to as a ceramic substrate), which is not intended to limit the scope of the present disclosure. FIG. 8 is a schematic diagram illustrating an exemplary ceramic substrate according to some embodiments of the present disclosure. The ceramic substrate 800 shown in FIG. 8 may be an exemplary embodiment of the substrate 202, which is viewed from the sensor layer along the reference direction A as shown in FIG. 2. The ceramic substrate 800 may include a plurality of bonding pads 801. Each of the plurality of bonding pads 801 may include a diameter from 150 microns to 200 microns (i.e., a diameter of 150 um - 200 um), or from 160 um - 190 um, or from 165 um - 185 um, etc. In some embodiments, each of the plurality of bonding pads 801 may include an aperture 802 configured to arrange and route one or more wires of the wire(s) welded to the plurality of bonding pads. The aperture 802 may have a diameter from 75 microns to 100 microns (i.e., a diameter of 75 um - 100 um), or from 80 um - 90 um, or from 85 um -95 um, etc., such that the wire may pass through the aperture. In some embodiments, a count (or number) of the plurality of bonding pads 801 may correspond to be equal to the count of the weld metal dots 204. Each of the plurality of bonding pads 801 may correspond to one of the weld metal dots 204. Each of the weld metal dots 204 may be connected with a wire passing through an aperture 802 of a bonding pad 801 corresponding to the weld metal dot 204 for transmitting the electrical signal of a pixel corresponding to the weld metal dot 204 to the processing circuit 203. In some embodiments, electrical signals of two or more pixels corresponding to two or more (e.g., 2, 4, 6, etc.) weld metal dots 204 may be transmitted to the processing circuit 203 together via a form of differential signal for further processing. In some embodiments, a distance between two adjacent wires of the wires welded to the plurality of bonding pads 801 may be less than or equal to 50 microns (i.e., 50 um), or less than 45 um, or less than 40 um, etc. In some embodiments, the distance (denoted by d as shown in FIG. 8) between an edge of an edge bonding pad of the plurality of bonding pad 801s and an edge of the ceramic substrate 800 may be less than half of a pixel size. As used herein, an edge bonding pad may refer to a bonding pad among the plurality of edge bonding pads 810 that is closest to an edge of the ceramic substrate 800. As shown in FIG. 8, the ceramic substrate 800 may include 4 edges and the plurality of bonding pads 801 may include 12 edge bonding pads. Each of the 4 edges of the ceramic substrate 800 may correspond to 4 edge bonding pads and two adjacent edges of the 4 edges of the ceramic substrate 800 may share an edge bonding pad. The distance between an edge of each of the 12 edge bonding pads and its corresponding edge of the ceramic substrate 800 may be less than half of a pixel size. The pixel size may be from 200 microns to 300 microns (i.e., 200 um -300 um), or from 220 um - 280 um, or from 250 um - 280 um, etc. Accordingly, in such cases, after the ceramic substrate 800 is aligned and welded with the sensor layer 201, the edge of the ceramic substrate 800 may not protrude from the edge of the sensor layer in the view from the reference direction. When more than one photon-counting detectors 200 are used for imaging, the ceramic substrates 800 of the photon-counting detectors 200 may need to be connected (e.g., jointed) to form a detector assembly (e.g., the detector assembly 112). Under the situation that the edge of the ceramic substrate 800 does not protrude from the edge of the sensor layer, dead spaces (e.g., a space where there's no imaging) of the detector assembly formed by jointing the ceramic substrates 800 of the photon-counting detectors 200 may be reduced, which can improve the imaging effect using the detector assembly.

In some embodiments, a thickness of the substrate 202 (e.g., the ceramic substrate 800) along the reference direction A may be less than or equal to 1 millimeter (i.e., 1 mm), or 0.9 mm, or 0.85 mm, etc. The thickness of the ceramic substrate 800 may affect a power dissipation of the photon-counting detector. The greater the thickness of the ceramic substrate 800 is, the greater the power dissipation of the photon-counting detector may be, which may result in higher heat emission of the photon-counting detector. In some embodiments, the thickness of the ceramic substrate 800 may affect a warping level of a surface of the ceramic substrate 800 that is substantially perpendicular to the reference direction A. The less the thickness of the ceramic substrate 800 is, the greater a warping level of the ceramic substrate 800 may be. However, the warping level of a surface of the ceramic substrate 800 that is substantially perpendicular to the reference direction may need to be not larger than (e.g., less than or equal to) 40 microns (i.e., 40 um), or 35 um, or less than 30 um, etc. Accordingly, to balance the needs of the power dissipation of the photon-counting detector and the warping level of a surface of the ceramic substrate 800, the thickness of the ceramic substrate 800 may need to be at least less than 1 mm, which may be a challenge to the manufacturing process and technology for the ceramic substrate.

In some embodiments, the substrate 202 (e.g., the ceramic substrate 800) may be made (or produced) at a low temperature (e.g., a temperature between room temperature and 200°C). In some embodiments, the ceramic substrate 800 may be made under a relatively high temperature (e.g., 1000°C). In some embodiments, the ceramic substrate 800 may correspond to a low dielectric constant (e.g., a dielectric constant less than a threshold).

In some embodiments, the substrate 202 (e.g., the ceramic substrate 800) may have a stray capacitance that is less than a threshold (e.g., 500 femto farads (fF)). In some embodiments, the stray capacitance of the ceramic substrate 800 and/or the warping level of the surface of the ceramic substrate 800 that is substantially perpendicular to the reference direction A may be affected by several factors (e.g., the distance between two adjacent wires of the wires of the ceramic substrate 800, the thickness of the ceramic substrate 800 along the reference direction A, etc.). The affection of a factor on the stray capacitance of the ceramic substrate 800 and the affection of the factor on the warping level of the surface of the ceramic substrate 800 may be the opposite. For example, the greater the distance between two adjacent wires of the wires of the ceramic substrate 800 is, the less the stray capacitance of the ceramic substrate 800 may be and the greater the warping level of the surface of the ceramic substrate 800 may be. As another example, the greater the thickness of the ceramic substrate 800 along the reference direction A is, the greater the stray capacitance of the ceramic substrate 800 may be and the less the warping level of the surface of the ceramic substrate 800 may be. As still another example, the greater the distance between two adjacent wires of the wires of the ceramic substrate 800 is and the greater the thickness of the ceramic substrate 800 along the reference direction A is, the greater the stray capacitance of the ceramic substrate 800 may be and the less the warping level of the surface of the ceramic substrate 800 may be. As yet another example, the smaller the distance between two adjacent wires of the wires of the ceramic substrate 800 is and the lesser the thickness of the ceramic substrate 800 along the reference direction A is, the lesser the stray capacitance of the ceramic substrate 800 may be and the greater the warping level of the surface of the ceramic substrate 800 may be. Accordingly, the ceramic substrate 800 may be designed to consider and balance above described parameter needs (e.g., the needs for warping level and stray capacitance). For example, the thickness of the ceramic substrate 800 may be determined such that the stray capacitance of the ceramic substrate 800 and/or the warping level of the surface of the ceramic substrate 800 may be in certain ranges, respectively.

The substrate 202 (e.g., the ceramic substrate 800) may be configured to achieve data transmission between the processing circuit 203 and other components (e.g., the sensor layer 201, the processing device 140, etc.) of the photon-counting detector 200 and/or the imaging device 110. For example, the ceramic substrate 800 may receive the electrical signal from the sensor layer 201. The ceramic substrate 800 may transmit the electrical signal to the processing circuit 203. As another example, the ceramic substrate 202 may receive an electronic signal including information of the incident radiation photons from the processing circuit 203. The ceramic substrate 800 may output the electronic signal including information of the incident radiation photons (e.g., transmit the electronic signal including information of the incident radiation photons to the processing device 140).

The processing circuit 203 may include an integrated circuit such as an application-specific integrated circuit (ASIC). In some embodiments, the processing circuit 203 may be integrated as a processing chip. In some embodiments, the processing circuit 203 may be configured to receive, through the substrate 202 (e.g., the ceramic substrate 800), the electronic signal for determining information (e.g., energy) of the incident radiation photons. The information of the incident radiation photons may be used for subsequent image reconstruction.

In some embodiments, the processing circuit 203. may include a plurality of processing units. A count (number) of the plurality of processing units may be equal to a count (number) of the metal dots printed on the surface of the sensor layer 201. Each of the plurality of processing units may correspond to a pixel. Each of the plurality of processing units may be configured to process an electrical signal corresponding to the pixel for determining information of the incident radiation photons corresponding to the pixel.

In some embodiments, the processing circuit 203 may include an amplifier, a threshold comparator, a counter, a readout circuit, etc. The amplifier (e.g., a charge-sensitive amplifier) may amplify the electrical signal generated by the positive electrode and send the amplified electrical signal to the comparator. The comparator may compare the signal amplitude of the amplified electrical signal with an amplitude threshold. If a signal amplitude of the amplified electrical signal is larger than the amplitude threshold, the counter may add a count. Since a count (or number) of the electrical-hole pairs is proportional to the energy of incident radiation photons, a signal amplitude output from the amplifier may be also proportional to the energy of the radiation incident photons. Therefore, the amplitude threshold of the comparator may be directly related to the energy of the incident radiation photons. In some embodiments, by changing the amplitude threshold of the comparator from small to large (or from large to small) and performing a plurality of measurements, information (e.g., flow rates and/or energy spectra of different energy) of the incident radiation photons may be obtained by processing signal amplitudes output from the amplifier using mathematical manners. Then, the readout circuit may output a signal including the information of the incident radiation photons.

In some embodiments, a size of the substrate 202 (e.g., the ceramic substrate 800) may be larger than the size of the processing circuit 203, such that a projection of the processing circuit 203 may be within an area of a projection of the ceramic substrate 202 along the reference direction A perpendicular the surface of the sensor layer 201 that receives the incident radiation photons. Accordingly, an edge region (e.g., an edge region B and/or an edge region B' as shown in FIG. 2) of the ceramic substrate 800 may be connected with one or more output interfaces 206 for outputting the electronic signal including the information of the incident radiation photons. The output interface(s) 206 may include a standardized communication port, such as RS232, RS485, etc. In some embodiments, the output interface(s) 206 may be a specially designed communication port. For example, the output interface(s) 206 may be designed in accordance with the digital imaging and communications in medicine (DICOM) protocol. As used herein, the edge region of the ceramic substrate 800 refers to a region close to the boundary of the ceramic substrate 800. The edge region may be on the surface of ceramic substrate 800 that is substantially perpendicular to the reference direction A and away from the sensor layer 201. A projection of the edge region of the ceramic substrate 800 may be not overlapped with the projection of the processing circuit 203 along the reference direction A.

In some embodiments, the substrate 202 (e.g., the ceramic substrate 800) may be electrically connected with the sensor layer 201 via a flip-chip bonding interconnection such as a conductive epoxy bonding interconnection, a cold-weld indium bump bonding interconnection, or the like, or any combination thereof. For the conductive epoxy bonding interconnection, the array of weld metal dots 204 may include an array of silver (Ag)-loaded epoxy dots. The ceramic substrate 800 and the sensor layer 201 with the array of silver (Ag)-loaded epoxy dots may be cured on a flip-chip bonder at a preset temperature (e.g., 45 °C). Thus, the ceramic substrate 800 may be electrically connected with the sensor layer 201 by the array of weld metal dots 204, and the ceramic substrate 800 may receive the electrical signal from the sensor layer 201. For the cold-weld indium bump bonding interconnection, the weld metal dots 204 may be replaced by indium (In) bumps. The indium bumps may be deposited on the surface of the sensor layer 201 which is attached to the positive electrode and a surface of the ceramic substrate 800 which is close to the positive electrode using a vacuum evaporation technique. Thus, the ceramic substrate 800 may be electrically connected with the sensor layer 201 by the indium bumps, and the ceramic substrate 800 may receive the electrical signal from the sensor layer 201 via the indium bumps. In some embodiments, the space (e.g., spaces C as shown in FIG. 2) between the array of weld metal dots 204 or the space between the indium bumps may be filled with insulating resins. The insulating resins may have a property of good fluidity, such that the insulating resins may cover the connections (e.g., the array of weld metal dots 204 or the indium bumps) between the ceramic substrate 800 and the sensor layer 201, thereby reducing or avoiding disconnections between the ceramic substrate 800 and the sensor layer 201 and further improving the reliability of the photon-counting detector 200.

In some embodiments, the substrate 202 (e.g., the ceramic substrate 800) may be electrically connected with the processing circuit 203 via a flip-chip bonding interconnection, a wire-bonding interconnection, a wafer level packaging (WLP), a through silicon via (TSV), or the like, or any combination thereof. For the flip-chip bonding interconnection, as shown in FIG. 2, the substrate 202 (e.g., the ceramic substrate 800) may be electrically connected with the processing circuit 203 by an array of weld metal dots 205 between the substrate 202 and the processing circuit 203. A count (number) of the weld metal dots 205 may be the same as that of the weld metal dots 204. The array of the weld metal dots 205 may be similar to the weld metal dots 204. For example, a material of the weld metal dots 205 may be the same as or different from that of the weld metal dots 204. Alternatively, the array of weld metal dots 205 may be replaced by indium bumps. A count (number) of the weld metal dots 204 may be the same as that of the indium bumps. Thus, the processing circuit 203 may receive, via the array of weld metal dots 205 or the indium bumps, the electrical signal from the substrate 202 and/or transmit the electronic signal including the information of the incident radiation photons to the substrate 202.

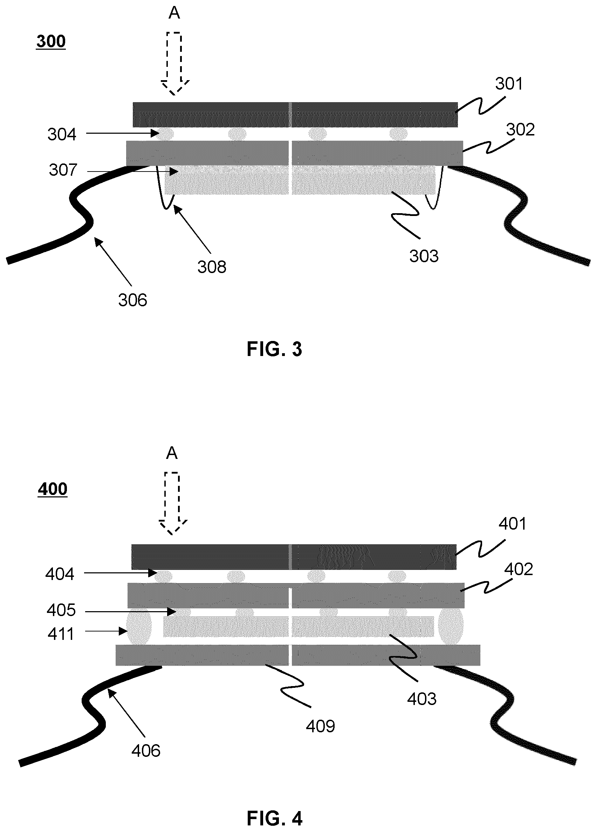

In some embodiments, the space (e.g., the spaces C) between the weld metal dots 205 or the space between the indium bumps may be filled with insulating resins. The insulating resins may have a property of good fluidity, such that the insulating resins may cover the connections (e.g., the array of weld metal dots 205 or the indium bumps) between the substrate 202 and processing circuit 203, thereby reducing or avoiding disconnections between the substrate 202 and the processing circuit 203 and further improving the reliability of the photon-counting detector 200. For the wire-bonding interconnection (not shown in FIG. 2), a first region of the processing circuit 203 may be connected with the substrate 202 via bonding, and a second region of the processing circuit 203 may be electrically connected with the substrate 202 via the wire-bonding interconnection (e.g., through wire(s) 208). The first region of the processing circuit 203 refers to a region on a surface of the processing circuit 203 that is substantially perpendicular to the reference direction A and close to the substrate 202, and the second region of the processing circuit 203 refers to a region on a surface of the processing circuit 203 that is substantially perpendicular to the reference direction A and away from the substrate 202. In such cases, the connection between the substrate 202 and the processing circuit 203 may be an insulation connection. Thus, the processing circuit 203 may receive, via the wire(s), the electrical signal from the substrate 202 and/or transmit the electronic signal including the information of the incident radiation photons to the substrate 202. More descriptions regarding the wire-bonding interconnection may be found elsewhere in the present disclosure (e.g., FIG. 3 and the description thereof).

FIG. 3 is a schematic diagram illustrating an exemplary photon-counting detector not encompassed by the appended claims, but suitable for understanding embodiments of the present disclosure. The photon-counting detector 300 may be an embodiment of the photon-counting detector as described in FIGs. 1A and FIG. 1B. The photon-counting detector 300 may be applied in or be a part of the imaging device 110 for imaging. As illustrated in FIG. 3, the photon-counting detector 300 may include a sensor layer 301, a substrate 302 (e.g., a ceramic substrate similar to the ceramic substrate 800), and a processing circuit 303, which may be similar to or the same as the sensor layer 201, the substrate 202, and the processing circuit 203 of the photon-counting detector 200, respectively. For example, the sensor layer 301 may be electrically connected with the substrate 302 via weld metal dots 304 or In pumps, which is similar to or the same as the connection between the sensor layer 201 and the substrate 202. The substrate 302 may be connected with one or more output interfaces 306 which is the same as or similar to the output interface(s) 206, for outputting the electronic signal including the information of the incident radiation photons. More descriptions for the sensor layer 301, the substrate 302, and the processing circuit 303 may be found elsewhere in the present disclosure (e.g., FIG. 2).

A difference between the photon-counting detectors 200 and 300 may include that the substrate 202 is connected with the processing circuit 203 via a flip-chip bonding interconnection in the photon-counting detector 200, while the substrate 302 is connected with the processing circuit 303 via a wire-bonding interconnection in the photon-counting detector 300. As shown in FIG. 3, a first region of the processing circuit 303 may be connected with the substrate 302 via bonding (e.g., through a bonding agent 307), and a second region of the processing circuit 303 may be electrically connected with the substrate 302 via the wire-bonding interconnection (e.g., through wire(s) 308). The first region may be on a surface of the processing circuit 303 that is substantially perpendicular to the reference direction A and close to the substrate 302. The second region may be on a surface of the processing circuit 303 that is substantially perpendicular to the reference direction A and away from the substrate 302. The connection between the substrate 302 and the processing circuit 303 may be an insulation connection. Thus, the processing circuit 303 may receive, via the wire(s) 308, the electrical signal from the substrate 302 and/or transmit the electronic signal including the information of the incident radiation photons to the substrate 302. For example, the wire(s) 308 connecting the substrate 302 with the processing circuit 303 may include a gold wire, an aluminum wire, a copper wire, or the like or any combination thereof. The bonding agent 307 connecting the substrate 302 and the processing circuit 303 may include a resin adhesive such as an epoxy resin adhesive.

It should be noted that the descriptions of the photon-counting detectors 200 and 300 are merely provided for the purposes of illustration, and not intended to limit the scope of the present disclosure. For persons having ordinary skills in the art, multiple variations and modifications may be made under the teachings of the present disclosure. In some embodiments, a bonding pad 801 may include a shape other than a circle. For example, the bonding pad may include a shape, e.g., a rectangular, a square, an oval, etc. However, those variations and modifications do not depart from the scope of the present disclosure.

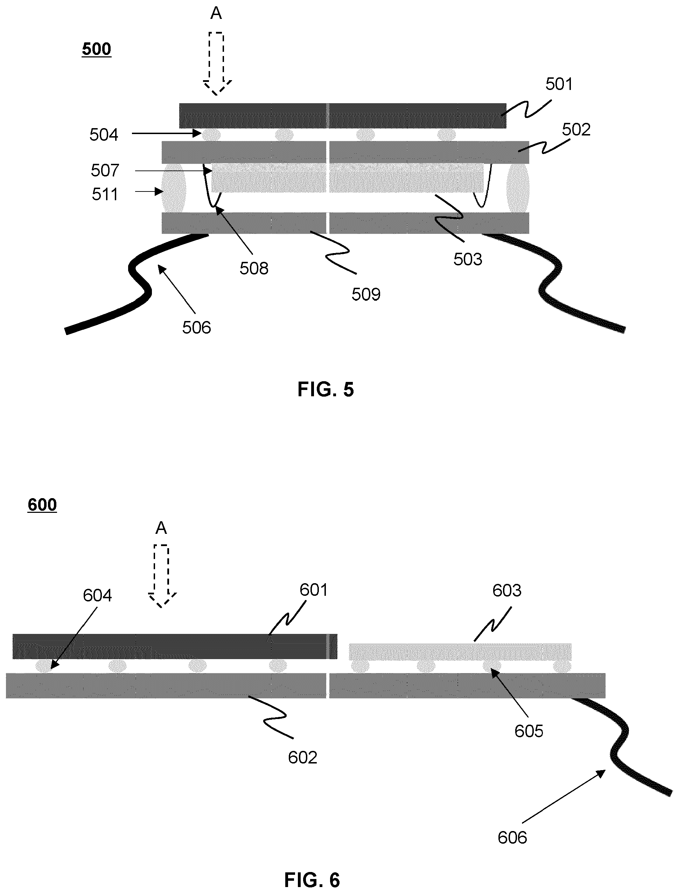

In some embodiments, the photon-counting detector 200 and/or the photon-counting detector 300 may include more than one processing circuit 203. For example, the photon-counting detector 200 or the photon-counting detector 300 may include two processing circuits 203, three processing circuits, etc. In such cases, the more than one processing circuit 203 may be connected on a same surface of the substrate 202 that is substantially perpendicular to the reference direction A and away from the sensor layer 201. A projection of the more than one processing circuit 203 may be within an area of the projection of the substrate 202 along the reference direction A. The projection of the edge region of the substrate 202 connected with the output interface(s) may be not overlapped with the projection of the more than one processing circuit 203 along the reference direction A. In some embodiments, the photon-counting detector 200 or the photon-counting detector 300 may include more than one substrate 202. For example, the photon-counting detector 200 or the photon-counting detector 300 may include two substrates 202, between which the processing circuit(s) 203 is arranged, more descriptions of which may be found elsewhere in the present disclosure (e.g., FIGs. 4 and 5 and the descriptions thereof). As encompassed by the appended claims, the sensor layer 201 and the processing circuit(s) 203 are on the same surface of the substrate 202 that is substantially perpendicular to the reference direction A, more descriptions of which may be found elsewhere in the present disclosure (e.g., FIGs. 6 and 7 and the descriptions thereof).

FIG. 4 is a schematic diagram illustrating an exemplary photon-counting detector not encompassed by the appended claims, but suitable for understanding embodiments of the present disclosure. The photon-counting detector 400 may be an embodiment of the photon-counting detector as described in FIGs. 1A and 1B. The photon-counting detector 400 may be applied in or be a part of the imaging device 110 for imaging. As illustrated in FIG. 4, the photon-counting detector 400 may include a sensor layer 401, a first substrate 402, a processing circuit 403, and a second substrate 409. The processing circuit 403 may be arranged between the first substrate 402 and the second substrate 409. The first substrate 402 may be arranged (or disposed) between the processing circuit 403 and the sensor layer 401. For illustration purposes, the first substrate 402 and the second substrate 409 may be described with reference to a first substrate 402 made of ceramic (also referred to as a first ceramic substrate 402 for brevity) and a second substrate 409 made of ceramic (also referred to as a second ceramic substrate 409 for brevity), which is not intended to limit the scope of the present disclosure. It should be noted that the first substrate 402 and/or the second substrate 409 may be made of any other materials that can achieve the functions of the first ceramic substrate 402 and/or the second ceramic substrate 409 as described in the following.

The sensor layer 401 may be configured to absorb incident radiation photons (e.g., incident X-ray photons) and generate an electrical signal. The sensor layer 401 may be electrically connected with the first ceramic substrate 402 (e.g., via weld metal dots 404, indium bumps, etc.). The sensor layer 401 may be similar to or the same as the sensor layer 201 as shown in FIG. 2, and the connection between the sensor layer 401 and the first ceramic substrate 402 may be similar to or the same as the connection between the sensor layer 201 and the substrate 202.

The first ceramic substrate 402 may be configured to achieve data transmission between the processing circuit 403 and other components (e.g., the sensor layer 401, the processing device 140, etc.) of the photon-counting detector 400 and/or the imaging device 110. The first ceramic substrate 402 may be similar to the substrate 202 as shown in FIG. 2 or the ceramic substrate 800 as shown in FIG. 8. For example, parameter(s) of the first ceramic substrate 402 may be similar to the parameters of the substrate 202 or the ceramic substrate 800. In some embodiments, a difference between the first ceramic substrate 402 of the photon-counting detector 400 and the substrate 202 of the photon-counting detector 200 may include that the substrate 202 outputs the electronic signal including the information of the incident radiation photons by the output interface(s) connected with the edge region of the substrate 202, while the first ceramic substrate 402 outputs the electronic signal including the information of incident radiation photons via the second ceramic substrate 409.

As shown in FIG. 4, the second ceramic substrate 409 may be electrically connected with the first ceramic substrate 402 via weld metal dots 411. Alternatively, the second ceramic substrate 409 may be electrically connected with the first ceramic substrate 402 via indium bumps. An edge region of the first ceramic substrate 402 may be configured to print the weld metal dots 411 or the indium bumps for connecting the first ceramic substrate 402 and the second ceramic substrate 409. The second ceramic substrate 409 may be connected with one or more output interface(s) 406 for outputting the electronic signal including the information of the incident radiation photons. The one or more output interface(s) 406 may be on a surface of the second ceramic substrate 409 that is substantially perpendicular to the reference direction A and away from the first ceramic substrate 402. Accordingly, after the first ceramic substrate 402 receives the electronic signal including the information of the incident radiation photons, the second ceramic substrate 409 may receive, via the weld metal dots 411, the electronic signal including the information of the incident radiation photons from the first ceramic substrate 402 and output, via the output interface(s) 406, the electronic signal including the information of the incident radiation photons for further processing. In some embodiments, a weld metal dot 411 may be a weld tin alloy dot which is generated by enclosing a copper ball using tin alloy. Thus, the weld metal dot 411 may have a relatively large size (e.g., volume and/or area), which may have an improved tolerance for a potential slight warping of the first ceramic substrate 402 and/or the second ceramic substrate 409 and an improved welding strength. In some embodiments, a size of the output interface(s) 406 may be not greater than the size of the second ceramic substrate 409. In some embodiments, the second ceramic substrate 409 may be the same as or similar to the first ceramic substrate 402. For example, parameters of the second ceramic substrate 409 may be the same as or similar to parameters of the first ceramic substrate 402.

The processing circuit 403 may be configured to process the electronic signal for determining the information of the incident radiation photons, which is similar to the processing circuit 203. The processing circuit 403 may be electrically connected with the first ceramic substrate 402 via weld metal dots 405 or indium bumps, which is similar to or the same as the connection between the substrate 202 and the processing circuit 203.

FIG. 5 is a schematic diagram illustrating an exemplary photon-counting detector not encompassed by the appended claims, but suitable for understanding embodiments of the present disclosure. The photon-counting detector 500 may be an embodiment of the photon-counting detector as described in FIGs. 1A and FIG. 1B. The photon-counting detector 500 may be applied in or be a part of the imaging device 110 for imaging. As illustrated in FIG. 5, the photon-counting detector 300 may include a sensor layer 501, a first ceramic substrate 502, a processing circuit 503, and a second ceramic substrate 509, functions of which may be similar to the sensor layer 401, the first ceramic substrate 402, the processing circuit 403, and the second ceramic substrate 409 of the photon-counting detector 400 respectively. For example, the sensor layer 501 may be electrically connected with the first ceramic substrate 502 via weld metal dots 504 or In pumps, which is similar to or the same as the connection between the sensor layer 401 and the first ceramic substrate 402. The first ceramic substrate 502 may be electrically connected with the second ceramic substrate 509 via weld metal dots 511 or indium bumps, which is similar to or the same as the connection between the first ceramic substrate 402 and the second ceramic substrate 409. The second ceramic substrate 409 may be connected with one or more output interfaces 506 which is the same as or similar to the output interface(s) 406, for outputting the electronic signal including the information of the incident radiation photons.

A difference between the photon-counting detectors 400 and 500 may include that the first ceramic substrate 402 is connected with the processing circuit 403 via a flip-chip bonding interconnection in the photon-counting detector 400, while the first ceramic substrate 502 in the photon-counting detector 500 is connected with the processing circuit 503 via a wire-bonding interconnection. As shown in FIG. 5, a first region of the processing circuit 503 may be connected with the first ceramic substrate 502 via bonding (e.g., through a bonding agent 507), and a second region of the processing circuit 503 may be electrically connected with the first ceramic substrate 502 via the wire-bonding interconnection (e.g., through wire(s) 508). The bonding agent 507 and the wire(s) 508 may be the same as or similar to the bonding agent 307 and the wire(s) 308 described in FIG. 3, respectively. Thus, the processing circuit 503 may receive, via the wire(s) 508, the electrical signal from the first ceramic substrate 502 and/or transmit the electronic signal including the information of the incident radiation photons to the first ceramic substrate 502.

It should be noted that the descriptions of the photon-counting detectors 400 and 500 are merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, the second ceramic substrate 409 or 509 may be replaced by a substrate made of materials that are similar to the ceramic material. For example, the substrate may be made of a material that has a coefficient of thermal expansion close to that of sensor layer 401 or 501.

FIG. 6 is a schematic diagram illustrating an exemplary photon-counting detector according to some embodiments of the present disclosure. The photon-counting detector 600 may be an embodiment of the photon-counting detector as described in FIGs. 1A and 1B. The photon-counting detector 600 may be applied in or be a part of the imaging device 110 for imaging. As illustrated in FIG. 6, the photon-counting detector 600 includes a first layer including a sensor layer 601 and a processing circuit 403, and may include a second layer including a substrate 602 (e.g., a ceramic substrate 602). The processing circuit 603 and the sensor layer 601 are arranged (or disposed) on a same surface of the ceramic substrate 602 that is substantially perpendicular to the reference direction A that is perpendicular to a surface of the sensor layer 601 that receives incident radiation photons.

The sensor layer 601 is configured to absorb the incident radiation photons (e.g., incident X-ray photons) and generate an electrical signal. The sensor layer 601 may be electrically connected with the ceramic substrate 602 (e.g., via weld metal dots 604, indium bumps, etc.). The sensor layer 601 may be similar to the sensor layer 201 as shown in FIG. 2, and the connection between the sensor layer 601 and the ceramic substrate 602 may be similar to or the same as the connection between the sensor layer 201 and the substrate 202.

The ceramic substrate 602 may be configured to achieve data transmission between the processing circuit 603 and other components (e.g., the sensor layer 601, the processing device 140, etc.) of the photon-counting detector 600 and/or the imaging device 110. The ceramic substrate 602 may be similar to the substrate 202 as shown in FIG. 2. As shown in FIG. 6, the ceramic substrate 602 may be connected with one or more output interfaces 606, which is similar to the output interface(s) 206, for outputting the signal including information of the incident radiation photons. A difference between the ceramic substrate 602 and the substrate 202 may include that the projection of the processing circuit 203 is needed to be within the area of the projection of the substrate 202 along the reference direction A, while both a projection of the processing circuit 603 and a projection of the sensor layer 601 are needed to be within an area of a projection of the ceramic substrate 602 along the reference direction A. That is, the projection of the ceramic substrate 602 may need to be larger than or equal to the projection of the processing circuit 603 and the projection of the sensor layer 601 along the reference direction A to place both the processing circuit 603 and the sensor layer 601 on a same surface of the ceramic substrate 602; while the projection of the substrate 202 may only need to be larger than a larger one of the projection of the processing circuit 203 and the projection of the sensor layer 201 along the reference direction A to place the processing circuit 203 and the sensor layer 201 on different sides of the substrate 202.

The processing circuit 603 may be configured to process the electronic signal for determining the information of the incident radiation photons, which is similar to the processing circuit 203. For example, the processing circuit 603 may be electrically connected with the ceramic substrate 602 via weld metal dots 605 or indium bumps, which is similar to or the same as the connection between the substrate 202 and the processing circuit 203.

FIG. 7 is a schematic diagram illustrating an exemplary photon-counting detector according to some embodiments of the present disclosure. The photon-counting detector 700 may be an embodiment of the photon-counting detector as described in FIGs. 1A and FIG. 1B. The photon-counting detector 700 may be applied in or be a part of the imaging device 110 for imaging. As illustrated in FIG. 7, the photon-counting detector 700 includes a first layer including a sensor layer 701 and a processing circuit 703, and a second layer including a substrate 702 (a ceramic substrate 702), functions of which may be similar to or the same as the sensor layer 601, the processing circuit 603, and the ceramic substrate 602 of the photon-counting detector 600, respectively. For example, the sensor layer 701 may be connected with one or more output interfaces 706 which is the same as or similar to the output interface(s) 606, for outputting the electronic signal including the information of the incident radiation photons.

A difference between the photon-counting detectors 600 and 700 may include that the ceramic substrate 602 is connected with the processing circuit 603 via a flip-chip bonding interconnection in the photon-counting detector 600, while the ceramic substrate 702 is connected with the processing circuit 703 via a wire-bonding interconnection in the photon-counting detector 700. As shown in FIG. 7, a first region of the processing circuit 703 may be connected with the ceramic substrate 702 via bonding (e.g., through a bonding agent 707), and a second region of the processing circuit 503 may be electrically connected with the ceramic substrate 702 via the wire-bonding interconnection (e.g., through wire(s) 708). The bonding agent 707 and the wire(s) 708 may be the same as or similar to the bonding agent 307 and the wire(s) 308 described in FIG. 3, respectively. Thus, the processing circuit 703 may receive, via the wire(s) 708, the electrical signal from the ceramic substrate 702 and/or transmit the electronic signal including the information of the incident radiation photons to the ceramic substrate 702.

It should be noted that the descriptions of the photon-counting detectors 600 and 700 are merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended for those skilled in the art, though not expressly stated herein. These alterations, improvements, and modifications are intended to be suggested by this disclosure, and are within the scope of the invention as defined by the appended claims.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this disclosure are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim.

In some embodiments, the numbers expressing quantities or properties used to describe and claim certain embodiments of the application are to be understood as being modified in some instances by the term "about," "approximate," or "substantially." For example, "about," "approximate," or "substantially" may indicate $\pm 20\%$ variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

**Claims**

1. A photon-counting detector (200, 300, 400, 500, 600, 700), comprising:

   a sensor layer (201, 301, 401, 501, 601, 701) configured to absorb incident radiation photons and generate an electrical signal;
   a substrate (202, 302, 403, 503, 602, 702), electrically connected with the sensor layer; and
   one or more processing circuits (203, 303, 403, 503, 603, 703) electrically connected with the substrate, wherein the one or more processing circuits are configured to receive, through the substrate, the electrical signal for determining information of the incident radiation photons, wherein the sensor layer includes a first coefficient of thermal expansion, the substrate includes a second coefficient of thermal expansion, and a difference between the first coefficient of thermal expansion and the second coefficient of thermal expansion is less than a threshold;
   wherein the sensor layer and the one or more processing circuits are disposed on a same surface of the substrate that is substantially perpendicular to a reference direction,
   wherein the substrate includes a ceramic substrate, and the threshold is less than 2 ppm/K.

2. The photon-counting detector of claim 1, wherein the substrate is further configured to receive an electronic signal including the information of the incident radiation photons and output the electronic signal.

3. The photon-counting detector of claim 1, wherein a projection of the one or more processing circuits is within an area of a projection of the substrate along the reference direction, preferably, an edge region of the substrate is connected with an output interface for outputting the signal, a projection of the edge region of the substrate being not overlapped with the projection of the one or more processing circuits along the reference direction.

4. The photon-counting detector of claim 1, further comprising:
   a second substrate (409, 509) connected with the substrate and configured to output an electronic signal including the information of the incident radiation photons.

5. The photon-counting detector of claim 4, wherein the substrate and the second substrate are disposed on different sides of the one or more processing circuits that are substantially perpendicular to a reference direction.

6. The photon-counting detector of any one of claims 1-5, wherein a warping level of a surface of the substrate that is substantially perpendicular to a reference direction is less than or equal to 40 microns.

7. The photon-counting detector of any one of claims 1-6, wherein a thickness of the substrate along a reference direction is less than or equal to 1 millimeter.

8. The photon-counting detector of any one of claims 1-7, wherein the substrate includes a plurality of bonding pads (801) and wires welded to the plurality of bonding pads, and a diameter of each of the plurality of bonding pads is from 150 microns to 200 microns, preferably, each of the plurality of bonding pads includes an aperture (802) having a diameter from 75 microns to 100 microns, more preferably, a distance between two adjacent wires of the wires is less than or equal to 50 microns.

9. The photon-counting detector of claim 8, wherein a distance between an edge of an edge bonding pad of the plurality of bonding pads and an edge of the substrate is less than a half of a pixel size, preferably, the pixel size is from 200 microns to 300 microns.

10. The photon-counting detector of any one of claims 1-9, wherein one of the one or more processing circuits is electrically connected with the substrate via a flip-chip bonding interconnection or a wire-bonding interconnection, preferably, a first region of one of the one or more processing circuits is connected with the substrate via bonding, and a second region of the one of the one or more processing circuits is electrically connected with the substrate via the wire-bonding interconnection, more preferably, the substrate is connected with the sensor layer via a conductive epoxy bonding interconnection or a cold-weld indium bump bonding interconnection.

11. The photon-counting detector of claim 1, wherein the substrate is a single substrate.

**Patentansprüche**

1. Photonenzähldetektor (200, 300, 400, 500, 600, 700), umfassend:

eine Sensorschicht (201, 301, 401, 501, 601, 701), die so konfiguriert ist, dass sie einfallende Strahlungsphotonen absorbiert und ein elektrisches Signal erzeugt;
ein Substrat (202, 302, 403, 503, 602, 702), das elektrisch mit der Sensorschicht verbunden ist; und
eine oder mehrere Verarbeitungsschaltungen (203, 303, 403, 503, 603, 703), die elektrisch mit dem Substrat verbunden sind, wobei die eine oder die mehreren Verarbeitungsschaltungen so konfiguriert sind, dass sie, durch das Substrat, das elektrische Signal zum Ermitteln von Informationen der einfallenden Strahlungsphotonen empfangen, wobei die Sensorschicht einen ersten Wärmeausdehnungskoeffizienten einschließt, das Substrat einen zweiten Wärmeausdehnungskoeffizienten einschließt und die Differenz zwischen dem ersten Wärmeausdehnungskoeffizienten und dem zweiten Wärmeausdehnungskoeffizienten kleiner als ein Schwellenwert ist; wobei die Sensorschicht und die eine oder die mehreren Verarbeitungsschaltungen auf einer selben Oberfläche des Substrats angeordnet sind, die im Wesentlichen senkrecht zu einer Referenzrichtung ist, wobei das Substrat ein Keramiksubstrat einschließt und der Schwellenwert kleiner als 2 ppm/K ist.

2. Photonenzähldetektor nach Anspruch 1, wobei das Substrat weiter so konfiguriert ist, dass es ein elektronisches Signal, das die Informationen der einfallenden Strahlungsphotonen einschließt, empfängt und das elektronische Signal ausgibt.

3. Photonenzähldetektor nach Anspruch 1, wobei sich eine Projektion der einen oder mehreren Verarbeitungsschaltungen innerhalb eines Bereichs einer Projektion des Substrats entlang der Referenzrichtung befindet, wobei vorzugsweise ein Randbereich des Substrats mit einer Ausgabeschnittstelle zum Ausgeben des Signals verbunden ist, wobei eine Projektion des Randbereichs des Substrats nicht mit der Projektion der einen oder mehreren Verarbeitungsschaltungen entlang der Referenzrichtung überlappt ist.

4. Photonenzähldetektor nach Anspruch 1, weiter umfassend:
ein zweites Substrat (409, 509), das mit dem Substrat verbunden und so konfiguriert ist, dass es ein elektronisches Signal ausgibt, das die Informationen der einfallenden Strahlungsphotonen einschließt.

5. Photonenzähldetektor nach Anspruch 4, wobei das Substrat und das zweite Substrat auf unterschiedlichen Seiten der einen oder mehreren Verarbeitungsschaltungen angeordnet sind, die im Wesentlichen senkrecht zu einer Bezugsrichtung sind.

6. Photonenzähldetektor nach einem der Ansprüche 1 bis 5, wobei ein Verwerfungsniveau einer Oberfläche des Substrats, die im Wesentlichen senkrecht zu einer Referenzrichtung ist, kleiner als oder gleich 40 Mikrometer ist.

7. Photonenzähldetektor nach einem der Ansprüche 1 bis 6, wobei eine Dicke des Substrats entlang einer Referenzrichtung kleiner als oder gleich 1 Millimeter ist.

8. Photonenzähldetektor nach einem der Ansprüche 1 bis 7, wobei das Substrat eine Vielzahl von Bondinseln (801) und mit der Vielzahl von Bondinseln verschweißte Drähte einschließt und ein Durchmesser jeder von der Vielzahl von Bondinseln zwischen 150 Mikrometer und 200 Mikrometer beträgt, wobei vorzugsweise jede von der Vielzahl von Bondinseln eine Öffnung (802) einschließt, die einen Durchmesser von 75 Mikrometer bis 100 Mikrometer aufweist, wobei besonders bevorzugt ein Abstand zwischen zwei benachbarten Drähten von den Drähten kleiner als oder gleich 50 Mikrometer ist.

9. Photonenzähldetektor nach Anspruch 8, wobei ein Abstand zwischen einem Rand einer Rand-Bondinsel von der Vielzahl von Bondinseln und einem Rand des Substrats weniger als eine Hälfte einer Pixelgröße beträgt, wobei vorzugsweise die Pixelgröße von 200 Mikrometer bis 300 Mikrometer beträgt.

10. Photonenzähldetektor nach einem der Ansprüche 1 bis 9, wobei eine von der einen oder den mehreren Verarbeitungsschaltungen über eine Flip-Chip-Bonding-Verbindung oder eine Drahtbonding-Verbindung elektrisch mit dem Substrat verbunden ist, wobei vorzugsweise ein erster Bereich einer von der einen oder den mehreren Verarbeitungsschaltungen über Bonden mit dem Substrat verbunden ist und ein zweiter Bereich der einen von der einen oder den mehreren Verarbeitungsschaltungen über die Drahtbonding-Verbindung elektrisch mit dem Substrat verbunden ist, wobei besonders bevorzugt das Substrat über eine leitfähige Epoxidbonding-Verbindung oder eine kaltverschweißte Indium-Bump-Bonding-Verbindung mit der Sensorschicht verbunden ist.

**11.** Photonenzähldetektor nach Anspruch 1, wobei das Substrat ein einzelnes Substrat ist.

## Revendications

**1.** Détecteur de comptage de photons (200, 300, 400, 500, 600, 700), comprenant :

une couche de capteurs (201, 301, 401, 501, 601, 701) configurée pour absorber des photons de rayonnement incident et générer un signal électrique ;
un substrat (202, 302, 403, 503, 602, 702), relié électriquement à la couche de capteurs ; et
un ou plusieurs circuits de traitement (203, 303, 403, 503, 603, 703) reliés électriquement au substrat, dans lequel les un ou plusieurs circuits de traitement sont configurés pour recevoir, par l'intermédiaire du substrat, le signal électrique permettant de déterminer les informations sur les photons de rayonnement incident ; dans lequel la couche de capteurs inclut un premier coefficient de dilatation thermique, le substrat inclut un second coefficient de dilatation thermique et la différence entre le premier coefficient de dilatation thermique et le second coefficient de dilatation thermique est inférieure à un seuil ; dans lequel la couche de capteurs et les un ou plusieurs circuits de traitement sont disposés sur une même surface du substrat qui est sensiblement perpendiculaire à une direction de référence,
dans lequel le substrat inclut un substrat en céramique et le seuil est inférieur à 2 ppm/K.

**2.** Détecteur de comptage de photons selon la revendication 1, dans lequel le substrat est configuré en outre pour recevoir un signal électronique incluant les informations sur les photons de rayonnement incident et pour émettre le signal électronique.

**3.** Détecteur de comptage de photons selon la revendication 1, dans lequel une projection des un ou plusieurs circuits de traitement se trouve dans une zone d'une projection du substrat suivant la direction de référence, de préférence, une région de bord du substrat est reliée à une interface de sortie pour émettre le signal, une projection de la région de bord du substrat n'étant pas superposée à la projection des un ou plusieurs circuits de traitement suivant la direction de référence.

**4.** Détecteur de comptage de photons selon la revendication 1, comprenant en outre :
un second substrat (409, 509) relié au substrat et configuré pour émettre un signal électronique incluant les informations sur les photons de rayonnement incident.

**5.** Détecteur de comptage de photons selon la revendication 4, dans lequel le substrat et le second substrat sont disposés sur différents côtés des un ou plusieurs circuits de traitement qui sont sensiblement perpendiculaires à une direction de référence.

**6.** Détecteur de comptage de photons selon l'une quelconque des revendications 1-5, dans lequel le niveau de déformation d'une surface du substrat qui est sensiblement perpendiculaire à une direction de référence est inférieur ou égal à 40 micromètres.

**7.** Détecteur de comptage de photons selon l'une quelconque des revendications 1-6, dans lequel l'épaisseur du substrat suivant une direction de référence est inférieure ou égale à 1 millimètre.

**8.** Détecteur de comptage de photons selon l'une quelconque des revendications 1-7, dans lequel le substrat inclut une pluralité de plots de liaison (801) et des fils soudés à la pluralité de plots de liaison et un diamètre de chacun parmi la pluralité de plots de liaison va de 150 micromètres à 200 micromètres, de préférence, chacun parmi la pluralité de plots de liaison inclut une ouverture (802) présentant un diamètre allant de 75 micromètres à 100 micromètres, plus préférentiellement, une distance entre deux fils adjacents parmi les fils est inférieure ou égale à 50 micromètres.

**9.** Détecteur de comptage de photons selon la revendication 8, dans lequel la distance entre un bord d'un plot de liaison de bord parmi la pluralité de plots de liaison et un bord du substrat est inférieure à la moitié de la taille d'un pixel, de préférence, la taille d'un pixel va de 200 micromètres à 300 micromètres.

**10.** Détecteur de comptage de photons selon l'une quelconque des revendications 1-9, dans lequel l'un parmi les un ou plusieurs circuits de traitement est relié électriquement au substrat via une interconnexion de liaison par puce retournée ou une interconnexion de microcâblage, de préférence, une première région de l'un parmi les un ou plusieurs circuits de traitement est reliée au substrat par liaison et une seconde région de l'un parmi les un ou plusieurs circuits de traitement est reliée électriquement au substrat via l'interconnexion de microcâblage, plus préférentiellement, le substrat est relié à la couche de capteurs via une interconnexion de liaison époxy conductrice ou une interconnexion de liaison par bossage d'indium soudés à froid.

11. Détecteur de comptage de photons selon la revendication 1, dans lequel le substrat est un substrat unique.

**100**

110
113
111
115
114
112

150

Storage
Device

((°))

Network

120

140

130

130-1   130-2   130-3

...

**FIG. 1A**

FIG. 1B

**200**

A

C

201

204

202

205

203

B

206

B'

FIG. 2

FIG. 3

FIG. 4

500

A

501

504

502

507

511

508

509

503

506

**FIG. 5**

600

A

604

601

603

602

605

606

**FIG. 6**

700

704

A

701

708

703

702

707

706

**FIG. 7**

800

802

801

d

d

d

d

**FIG. 8**

**REFERENCES CITED IN THE DESCRIPTION**

**Patent documents cited in the description**

- US 2018292544 A

**Non-patent literature cited in the description**

- A germanium hybrid pixel detector with 55$\mu$m pixel size and 65,000 channels. **PENNICARD D et al.** JOURNAL OF INSTRUMENTATION. INSTITUTE OF PHYSICS PUBLISHING, 04 December 2014, vol. 9